# EUROPEAN PATENT APPLICATION

(11) **EP 4 390 316 A1**
(43) Date of publication of application: **26.06.2024**
(21) Application number: 22290084.7
(22) Date of filing: 23.12.2022
(51) Int. Cl.: G01C 21/20, G06V 20/00, G01C 21/00

(54) **USING AMBIGUOUS SEMANTIC LABELED IMAGES FOR UAV POSITIONING**

(71) Applicant: Wing Aviation LLC, Mountain View CA 94043 (US)
(72) Inventor: JOURDAN, Damien, 31770 Colomiers (FR); SHOEB, Ali, Mountain View California 94043 (US); GABOR, Jeremie, Mountain View 94043 (US)
(74) Representative: Derry, Paul Stefan

(57) **Abstract**

In some embodiments, a method of determining an estimated location of a UAV is provided. A captured image is received from a camera of the UAV. Semantic labels are generated by the UAV for a plurality of objects visible in the captured image. The UAV compares the semantic labels to reference labels associated with a reference map to determine a current location estimate. The UAV updates an accumulated location estimate using the current location estimate, and the UAV determines the estimated location of the UAV based on the accumulated location estimate.

## Description

### TECHNICAL FIELD

This disclosure relates generally to unmanned aerial vehicles (UAVs), and in particular but not exclusively, relates to controlling UAVs based on imagery.

### BACKGROUND

Fleets of UAVs are increasingly deployed from "nests," which are locations that provide a plurality of landing spaces at which UAVs may be placed to start a mission or at which UAVs may land after completing a mission. Nests are useful in that they provide a centralized location at which a plurality of UAVs can be based for preflight loading, charging, maintenance, and other tasks.

Typically, UAVs are able to autonomously navigate using a variety of positioning modalities. One such modality is a global satellite navigation system (GNSS), such as the Global Positioning System (GPS), where signals received from satellites are processed in order to determine a position of the UAV. Another such modality is an inertial navigation system, where accelerometers and/or other sensors are used to measure distances traveled by the UAV from a known starting point. Yet another such modality is visual navigation, in which images captured by cameras mounted to the UAV are compared to reference images in order to determine a position of the UAV.

One problem that occurs is that some positioning systems may not work well at or near a nest. For example, below certain altitudes, GNSS positioning may be disabled, and/or may be unreliable due to reflections off of ground features. As another example, visual navigation may be difficult since captured images may depict only a portion of a repeating pattern of features within the nest and thereby provide an ambiguous position. What is desired are techniques for determining a specific position from potentially ambiguous imagery, such as imagery of a nest.

### BRIEF SUMMARY

In some embodiments, a non-transitory computer-readable medium having computer-executable instructions stored thereon is provided. The instructions, in response to execution by one or more processors of an unmanned aerial vehicle (UAV), cause the UAV to perform actions comprising: receiving, from a camera of the UAV, a captured image; generating, by the UAV, semantic labels for a plurality of objects visible in the captured image; comparing, by the UAV, the semantic labels to reference labels associated with a reference map to determine a current location estimate; updating, by the UAV, an accumulated location estimate using the current location estimate; and determining, by the UAV, an estimated location of the UAV based on the accumulated location estimate.

In some embodiments, a method of determining an estimated location of a UAV is provided. A captured image is received from a camera of the UAV. Semantic labels are generated by the UAV for a plurality of objects visible in the captured image. The UAV compares the semantic labels to reference labels associated with a reference map to determine a current location estimate. The UAV updates an accumulated location estimate using the current location estimate, and the UAV determines the estimated location of the UAV based on the accumulated location estimate.

### BRIEF DESCRIPTION OF THE SEVERAL VIEWS OF THE DRAWINGS

Non-limiting and non-exhaustive embodiments of the invention are described with reference to the following figures, wherein like reference numerals refer to like parts throughout the various views unless otherwise specified. Not all instances of an element are necessarily labeled so as not to clutter the drawings where appropriate. The drawings are not necessarily to scale, emphasis instead being placed upon illustrating the principles being described. To easily identify the discussion of any particular element or act, the most significant digit or digits in a reference number refer to the figure number in which that element is first introduced.
FIG. 1 and FIG. 2 illustrate an aerial vehicle or UAV 100, in accordance with an embodiment of the present disclosure.
FIG. 3 is a block diagram that illustrates a non-limiting example embodiment of a UAV 300 according to various aspects of the present disclosure.
FIG. 4 is a block diagram that illustrates aspects of a non-limiting example embodiment of a fleet management computing system according to various aspects of the present disclosure.
FIG. 5 illustrates a non-limiting example of an aerial image of a nest according to various aspects of the present disclosure.
FIG. 6 illustrates a non-limiting example of semantic labels applied to the aerial image of FIG. 5 according to various aspects of the present disclosure.
FIG. 7A illustrates a non-limiting example embodiment of a reference map for a region that includes a nest, according to various aspects of the present disclosure.
FIG. 7B illustrates two non-limiting example embodiments of captured images of the area depicted in the reference map of FIG. 7B, according to various aspects of the present disclosure.
FIG. 8A - FIG. 8B are a flowchart that illustrates a non-limiting example embodiment of a method of determining a position of a UAV using ambiguous aerial imagery according to various aspects of the present disclosure.
FIG. 9 illustrates a non-limiting example embodiment of an initial accumulated location estimate according to various aspects of the present disclosure.
FIG. 10 illustrates a non-limiting example embodiment of a current location estimate according to various aspects of the present disclosure.
FIG. 11 illustrates a non-limiting example embodiment of an adjusted accumulated location estimate according to various aspects of the present disclosure.

### DETAILED DESCRIPTION

In some embodiments of the present disclosure, techniques are used that compensate for the ambiguous nature of aerial imagery of nests in order to determine positions of UAVs. Semantic labels may be applied to objects depicted in a captured image, and the semantic labels may be compared to reference labels in a reference map to determine a current location estimate. The current location estimate may be used to update an accumulated location estimate, from which an estimated location is determined. By using the accumulated location estimate, the UAV can overcome ambiguity in individual current location estimates to determine an accurate estimated location.

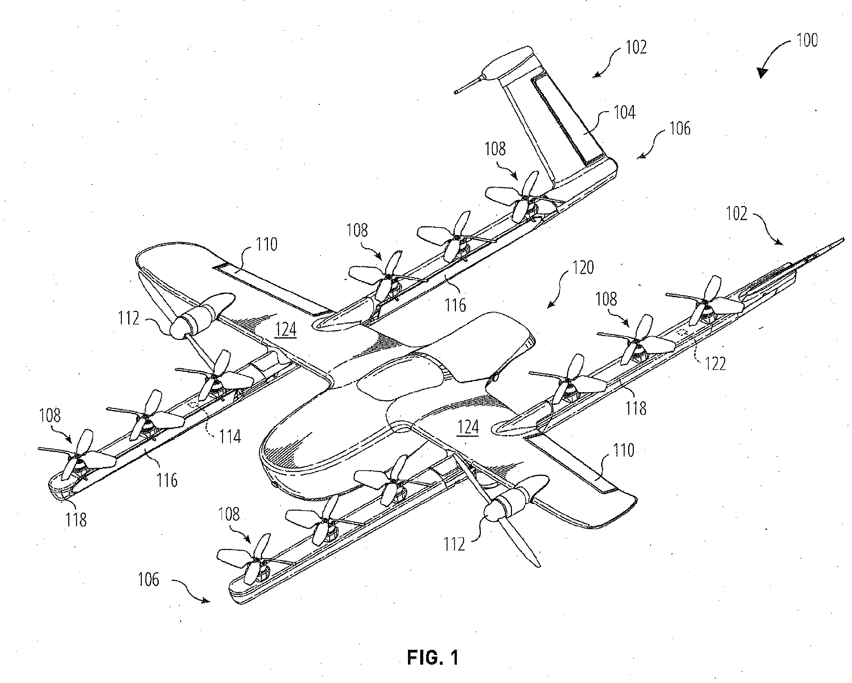

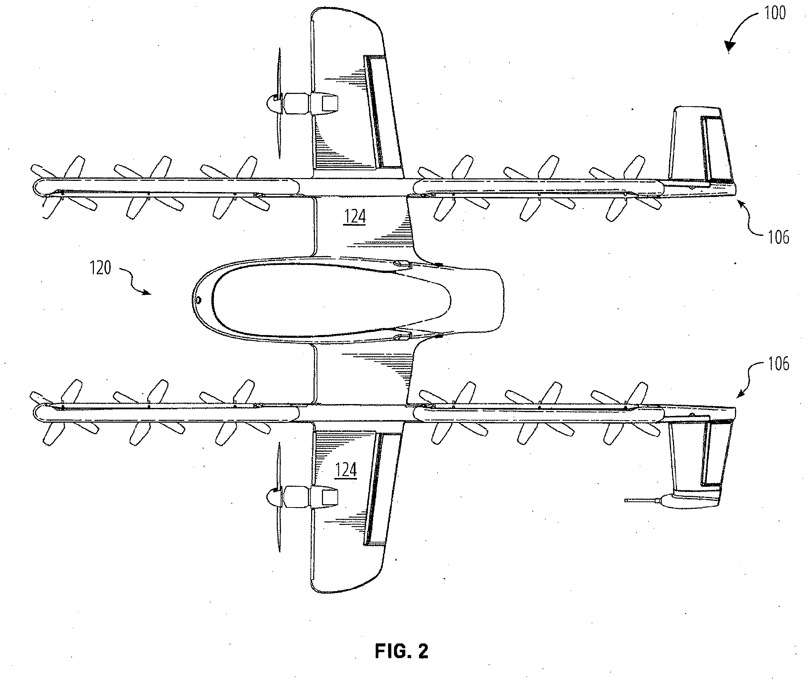

FIG. 1 and FIG. 2 illustrate an aerial vehicle or UAV 100, in accordance with an embodiment of the present disclosure. The illustrated embodiment of UAV 100 is a vertical takeoff and landing (VTOL) unmanned aerial vehicle (UAV) that includes separate propulsion units 112 and propulsion units 108 for providing horizontal and vertical propulsion, respectively. UAV 100 is a fixed-wing aerial vehicle, which as the name implies, has a wing assembly 124 that can generate lift based on the wing shape and the vehicle's forward airspeed when propelled horizontally by propulsion units 112. FIG. 1 is a perspective top view illustration of UAV 100 while FIG. 2 is a bottom side plan view illustration of UAV 100.

The illustrated embodiment of UAV 100 includes a fuselage 120. In one embodiment, fuselage 120 is modular and includes a battery module, an avionics module, and a mission payload module. These modules are detachable from each other and mechanically securable to each other to contiguously form at least a portion of the fuselage 120 or UAV main body.

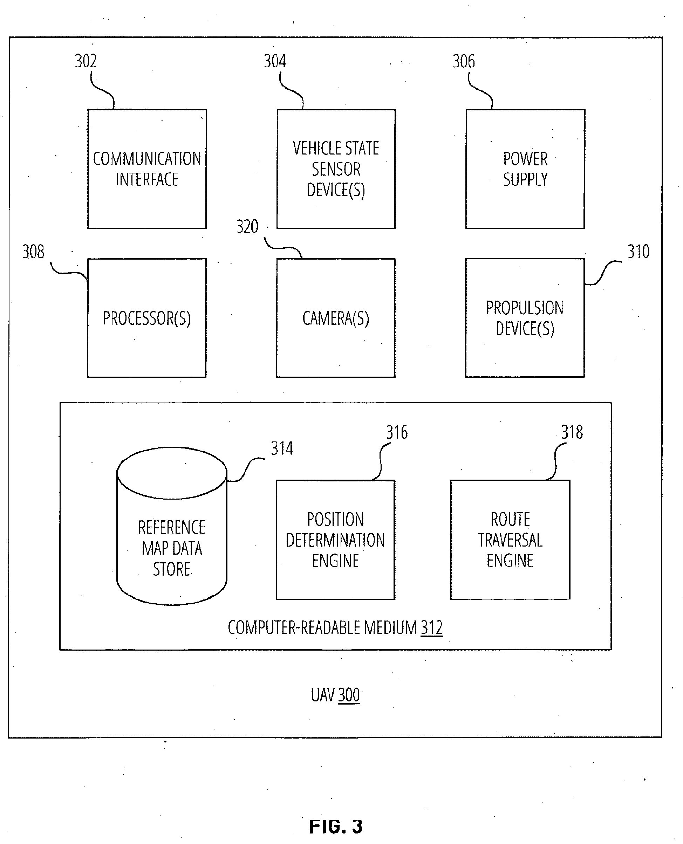

The battery module includes a cavity for housing one or more batteries for powering UAV 100. The avionics module houses flight control circuitry of UAV 100, which may include a processor and memory, communication electronics and antennas (e.g., cellular transceiver, Wi-Fi transceiver, etc.), and various sensors (e.g., global positioning sensor, an inertial measurement unit (IMU), a magnetic compass, etc.). The mission payload module houses equipment associated with a mission of UAV 100. For example, the mission payload module may include a payload actuator for holding and releasing an externally attached payload. In another embodiment, the mission payload module may include a camera/sensor equipment holder for carrying camera/sensor equipment (e.g., camera, lenses, radar, LIDAR, pollution monitoring sensors, weather monitoring sensors, etc.). Other components that may be carried by some embodiments of the UAV 100 are illustrated in FIG. 3.

The illustrated embodiment of UAV 100 further includes horizontal propulsion units 112 positioned on wing assembly 124, which can each include a motor, shaft, motor mount, and propeller, for propelling UAV 100. The illustrated embodiment of UAV 100 includes two boom assemblies 106 that secure to wing assembly 124.

The illustrated embodiments of boom assemblies 106 each include a boom housing 118 in which a boom is disposed, vertical propulsion units 108, printed circuit boards 116, and stabilizers 102. Vertical propulsion units 108 can each include a motor, shaft, motor mounts, and propeller, for providing vertical propulsion. Vertical propulsion units 108 may be used during a hover mode where UAV 100 is descending (e.g., to a delivery location) or ascending (e.g., following a delivery). Stabilizers 102 (or fins) may be included with UAV 100 to stabilize the UAV's yaw (left or right turns) during flight. In some embodiments, UAV 100 may be configured to function as a glider. To do so, UAV 100 may power off its propulsion units and glide for a period of time.

During flight, UAV 100 may control the direction and/or speed of its movement by controlling its pitch, roll, yaw, and/or altitude. For example, the stabilizers 102 may include one or more rudders 104 for controlling the UAV's yaw, and wing assembly 124 may include elevators for controlling the UAV's pitch and/or ailerons 110 for controlling the UAV's roll. As another example, increasing or decreasing the speed of all the propellers simultaneously can-result in UAV 100 increasing or decreasing its altitude, respectively. The UAV 100 may also include components for sensing the environment around the UAV 100, including but not limited to audio sensor 122 and audio sensor 114. Further examples of sensor devices are illustrated in FIG. 3 and described below.

Many variations on the illustrated fixed-wing aerial vehicle are possible. For instance, aerial vehicles with more wings (e.g., an "x-wing" configuration with four wings), are also possible. Although FIG. 1 and FIG. 2 illustrate one wing assembly 124, two boom assemblies 106, two horizontal propulsion units 112, and six vertical propulsion units 108 per boom assembly 106, it should be appreciated that other variants of UAV 100 may be implemented with more or fewer of these components.

It should be understood that references herein to an "unmanned" aerial vehicle or UAV can apply equally to autonomous and semi-autonomous aerial vehicles. In a fully autonomous implementation, all functionality of the aerial vehicle is automated; e.g., pre-programmed or controlled via real-time computer functionality that responds to input from various sensors and/or pre-determined information. In a semi-autonomous implementation, some functions of an aerial vehicle may be controlled by a human operator, while other functions are carried out autonomously. Further, in some embodiments, a UAV may be configured to allow a remote operator to take over functions that can otherwise be controlled autonomously by the UAV. Yet further, a given type of function may be controlled remotely at one level of abstraction and performed autonomously at another level of abstraction. For example, a remote operator may control high level navigation decisions for a UAV, such as specifying that the UAV should travel from one location to another (e.g., from a warehouse in a suburban area to a delivery address in a nearby city), while the UAV's navigation system autonomously controls more fine-grained navigation decisions, such as the specific route to take between the two locations, specific flight controls to achieve the route and avoid obstacles while navigating the route, and so on.

FIG. 3 is a block diagram that illustrates a non-limiting example embodiment of a UAV 300 according to various aspects of the present disclosure. The UAV 300 is a type of UAV 100 that is configured to use imagery for autonomous navigation.

As shown, the UAV 300 includes a communication interface 302, one or more vehicle state sensor device(s) 304, a power supply 306, one or more processor(s) 308, one or more propulsion device 310, one or more cameras 320, and a computer-readable medium 312.

In some embodiments, the communication interface 302 includes hardware and software to enable any suitable communication technology for communicating with a fleet management computing system, such as the fleet management computing system 410 described further below. In some embodiments, the communication interface 302 includes multiple communication interfaces, each for use in appropriate circumstances. For example, the communication interface 302 may include a long-range wireless interface such as a 4G or LTE interface, or any other type of long-range wireless interface (e.g., 2G, 3G, 5G, or WiMAX), to be used to communicate with the fleet management computing system 410 while traversing a route. The communication interface 302 may also include a medium-range wireless interface such as a Wi-Fi interface to be used when the UAV 300 is at an area near a start location such as a nest or an endpoint where Wi-Fi coverage is available. The communication interface 302 may also include a short-range wireless interface such as a Bluetooth interface to be used when the UAV 300 is in a maintenance location or is otherwise stationary and waiting to be assigned a route. The communication interface 302 may also include a wired interface, such as an Ethernet interface or a USB interface, which may also be used when the UAV 300 is in a maintenance location or is otherwise stationary and waiting to be assigned a route.

In some embodiments, the vehicle state sensor device(s) 304 are configured to detect states of various components of the UAV 300, and to transmit signals representing those states to other components of the UAV 300. Some non-limiting examples of vehicle state sensor device(s) 304 include a battery state sensor and a propulsion device health sensor. The vehicle state sensor device(s) 304 may also include a GNSS sensor, one or more accelerometers and/or other devices that are part of an inertial navigation system, LIDAR devices, and/or other sensor devices for sensing an environment of the UAV 300.

In some embodiments, the power supply 306 may be any suitable device or system for storing and/or generating power. Some non-limiting examples of a power supply 306 include one or more batteries, one or more solar panels, a fuel tank, and combinations thereof. In some embodiments, the propulsion devices 310 may include any suitable devices for causing the UAV 300 to travel along a path. For an aircraft, the propulsion devices 310 may include devices such as, but not limited to, one or more motors, one or more propellers, and one or more flight control surfaces.

In some embodiments, the processor(s) 308 may include any type of computer processor capable of receiving signals from other components of the UAV 300 and executing instructions stored on the computer-readable medium 312. In some embodiments, the computer-readable medium 312 may include one or more devices capable of storing information for access by the processor(s) 308. In some embodiments, the computer-readable medium 312 may include one or more of a hard drive, a flash drive, an EEPROM, and combinations thereof.

In some embodiments, the one or more cameras 320 may include any suitable type of camera for capturing imagery from the point of view of the UAV 300. For example, the cameras 320 may include one or more of a downward-facing camera or an angled-view camera. In some embodiments, the one or more cameras 320 may include one or more cameras of any type, including but not limited to a visible light camera, an infrared camera, a light-field camera, a laser camera, and a time-of-flight camera.

As shown, the computer-readable medium 312 has stored thereon a reference map data store 314, a position determination engine 316, and a route traversal engine 318.

As used herein, "computer-readable medium" refers to a removable or nonremovable device that implements any technology capable of storing information in a volatile or non-volatile manner to be read by a processor of a computing device, including but not limited to: a hard drive; a flash memory; a solid state drive; random-access memory (RAM); read-only memory (ROM); a CD-ROM, a DVD, or other disk storage; a magnetic cassette; a magnetic tape; and a magnetic disk storage.

In some embodiments, the position determination engine 316 is configured to use information from vehicle state sensor device(s) 304 and/or the cameras 320 to determine a position of the UAV 300 based on map information stored in the reference map data store 314. In some embodiments, the route traversal engine 318 is configured to cause the propulsion devices 310 to propel the UAV 300 through a route, based on the positions determined by the position determination engine 316.

As used herein, "engine" refers to logic embodied in hardware or software instructions, which can be written in one or more programming languages, including but not limited to C, C++, C#, COBOL, JAVA^{™}, PHP, Perl, HTML, CSS, JavaScript, VBScript, ASPX, Go, and Python. An engine may be compiled into executable programs or written in interpreted programming languages. Software engines may be callable from other engines or from themselves. Generally, the engines described herein refer to logical modules that can be merged with other engines, or can be divided into sub-engines. The engines can be implemented by logic stored in any type of computer-readable medium or computer storage device and be stored on and executed by one or more general purpose computers, thus creating a special purpose computer configured to provide the engine or the functionality thereof. The engines can be implemented by logic programmed into an application-specific integrated circuit (ASIC), a field-programmable gate array (FPGA), or another hardware device.

As used herein, "data store" refers to any suitable device configured to store data for access by a computing device. One example of a data store is a highly reliable, high-speed relational database management system (DBMS) executing on one or more computing devices and accessible over a high-speed network. Another example of a data store is a key-value store. However, any other suitable storage technique and/or device capable of quickly and reliably providing the stored data in response to queries may be used, and the computing device may be accessible locally instead of over a network, or may be provided as a cloud-based service. A data store may also include data stored in an organized manner on a computer-readable storage medium, such as a hard disk drive, a flash memory, RAM, ROM, or any other type of computer-readable storage medium. One of ordinary skill in the art will recognize that separate data stores described herein may be combined into a single data store, and/or a single data store described herein may be separated into multiple data stores, without departing from the scope of the present disclosure.

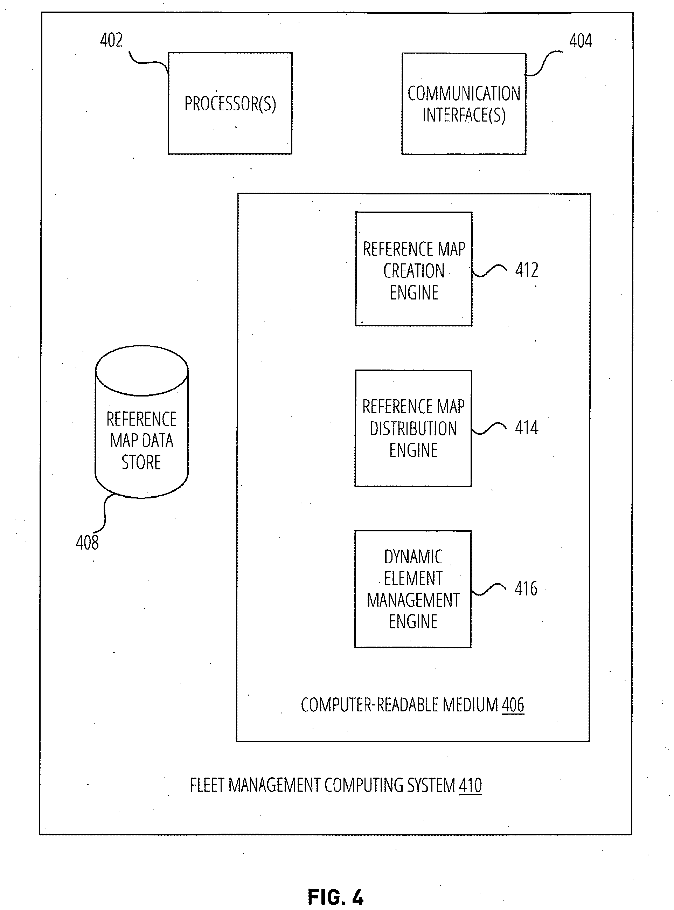

FIG. 4 is a block diagram that illustrates aspects of a non-limiting example embodiment of a fleet management computing system according to various aspects of the present disclosure. The illustrated fleet management computing system 410 may be implemented by any computing device or collection of computing devices, including but not limited to a desktop computing device, a laptop computing device, a mobile computing device, a server computing device, a computing device of a cloud computing system, and/or combinations thereof. The fleet management computing system 410 is configured to generate reference maps and to distribute them to UAVs 300. In some embodiments, the fleet management computing system 410 is also configured to communicate dynamic reference labels to UAVs 300 to be associated with dynamic reference maps.

As shown, the fleet management computing system 410 includes one or more processors 402, one or more communication interfaces 404, a reference map data store 408, and a computer-readable medium 406.

In some embodiments, the processors 402 may include any suitable type of general-purpose computer processor. In some embodiments, the processors 402 may include one or more special-purpose computer processors or AI accelerators optimized for specific computing tasks, including but not limited to graphical processing units (GPUs), vision processing units (VPTs), and tensor processing units (TPUs).

In some embodiments, the communication interfaces 404 include one or more hardware and or software interfaces suitable for providing communication links between components, such as between the fleet management computing system 410 and UAVs 300 in a fleet of UAVs 300. The communication interfaces 404 may support one or more wired communication technologies (including but not limited to Ethernet, FireWire, and USB), one or more wireless communication technologies (including but not limited to Wi-Fi, WiMAX, Bluetooth, 2G, 3G, 4G, 5G, and LTE), and/or combinations thereof.

As shown, the computer-readable medium 406 has stored thereon logic that, in response to execution by the one or more processors 402, cause the fleet management computing system 410 to provide a reference map creation engine 412, a reference map distribution engine 414, and a dynamic element management engine 416.

In some embodiments, the reference map creation engine 412 is configured to generate or obtain reference labels for reference maps, and to store the reference maps in the reference map data store 408. In some embodiments, the reference map distribution engine 414 is configured to transmit appropriate reference maps from the reference map data store 408 to a UAV 300 to prepare a UAV 300 for a mission. In some embodiments, the dynamic element management engine 416 is configured to determine the states of dynamic elements at a nest (e.g., whether or not landing spaces are occupied, active patterns of lighting, etc.), and to generate and distribute dynamic label information for the dynamic elements.

Further description of the configuration of each of these components is provided below.

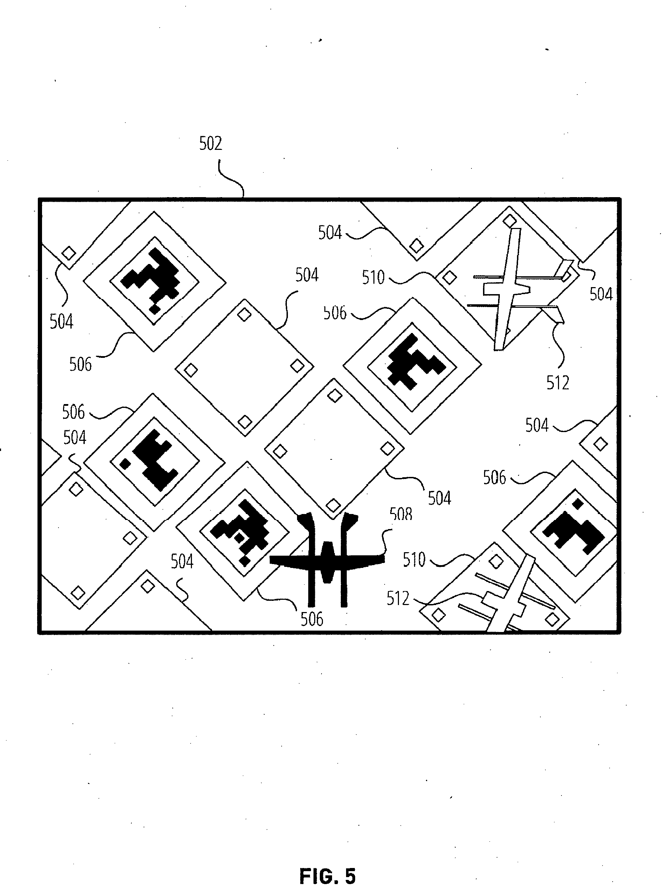

In some embodiments, the UAV 300 uses the camera 320 to capture aerial imagery while the UAV 300 is in flight. FIG. 5 illustrates a non-limiting example of an aerial image of a nest according to various aspects of the present disclosure. The aerial image 502 is an example of an image that may be captured shortly after the UAV 300 takes off from the nest, and shows several typical features that may be present in an aerial image of a nest.

As shown, the aerial image 502 includes a plurality of landing spaces, including a plurality of unoccupied landing spaces 504 and a plurality of occupied landing spaces 510 that have UAVs 512 present thereon. Though called a "landing space," the landing spaces are suitable locations for landing a UAV or for positioning a UAV prior to takeoff. In some embodiments, a landing space may be a marked area on the ground of the nest. In some embodiments, a landing space may be an object on which a UAV may land. For example, one non-limiting example of a type of landing space is a charging pad which can be used to inductively charge a UAV that has been positioned thereon.

The aerial image 502 also shows other features that may be visible, including a plurality of geofiducials 506 and a shadow 508 of a UAV. In some embodiments, geofiducials 506 may be installed at the nest and surveying techniques may be used to obtain precise geographic positions for the geofiducials 506 so that they may be used for visual positioning. That said, the installation and surveying of geofiducials 506 can be costly and time-consuming, and so the enabling of visual positioning that does not require the use of geofiducials 506 is preferable.

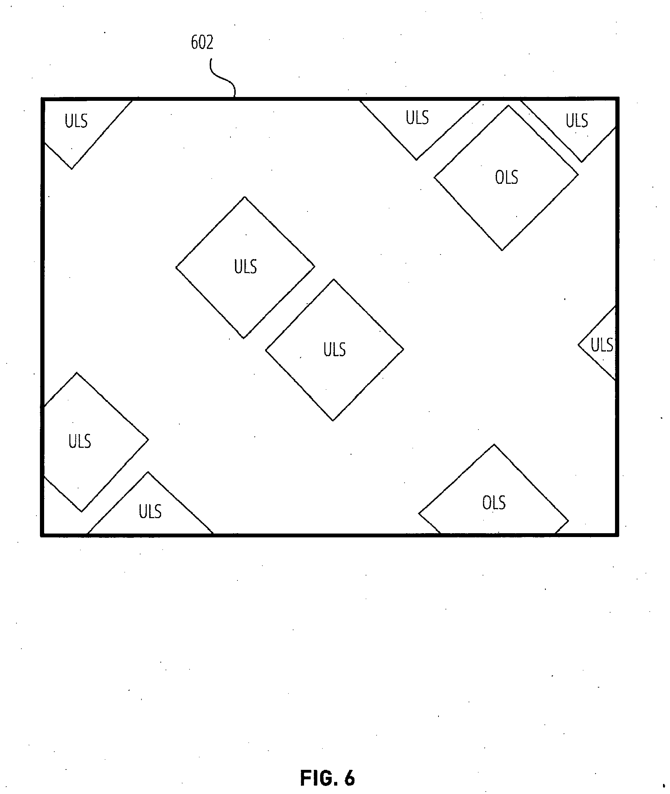

FIG. 6 illustrates a non-limiting example of semantic labels applied to the aerial image of FIG. 5 according to various aspects of the present disclosure. As shown, semantic labels 602 have been applied to the unoccupied landing spaces (ULS semantic labels) and the occupied landing spaces (OLS semantic labels). The semantic labels 602 may be output by a process that classifies each pixel of the aerial image 502 and then uses various morphological operations and/or heuristics to detect areas to which various semantic labels should be applied, by a process that uses a classifier to directly identify objects within the aerial image 502, or by any other suitable process. Though semantic labels for landing spaces are shown and described above, one should recognize that other types of semantic labels may be generated and applied, including but not limited to semantic labels for streets, buildings, landing spaces, telephone poles, light standards, sporting fields, and/or bodies of water.

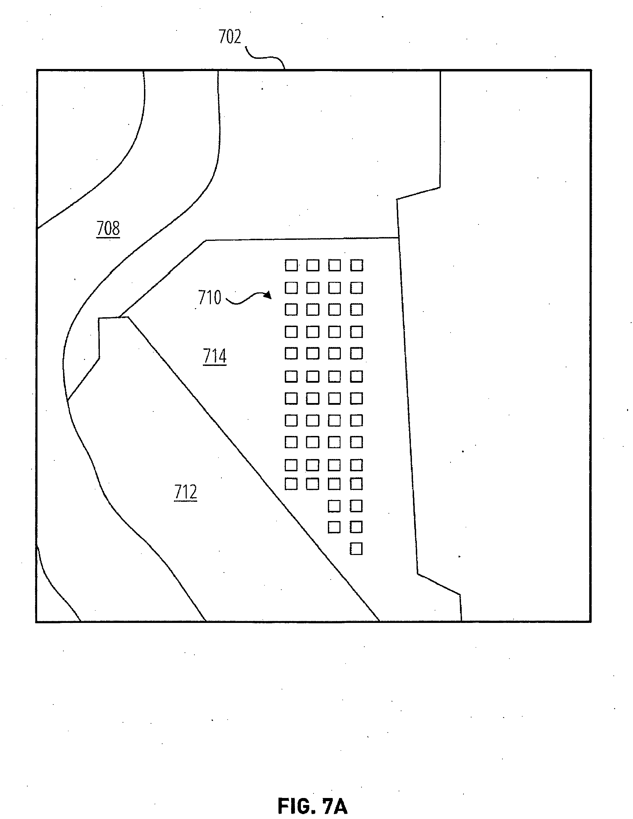

Once semantic labels are generated for an aerial image, the semantic labels can be aligned to reference labels in a reference map to determine a position for the camera, and thereby the UAV, that captured the aerial image. FIG. 7A illustrates a non-limiting example embodiment of a reference map for a region that includes a nest, according to various aspects of the present disclosure. In the reference map 702, reference labels have been applied to a body of water 708, a parking lot 712, a building 714, and landing spaces of a plurality of landing spaces 710. In some embodiments, the reference map 702 may include one or more aerial images that correspond to the reference labels, while in other embodiments, the reference map 702 may be limited to the reference labels themselves in order to conserve storage space.

In some embodiments, the reference labels may be manually applied to the reference map via a user interface provided by the reference map creation engine 412. In some embodiments, the reference map creation engine 412 may use machine learning techniques, including but not limited to classifiers such as convolutional neural networks, to identify objects depicted in the reference map and automatically generate the reference labels. In some embodiments, the reference map creation engine 412 may use data from one or more other sources, including but not limited to road map data, zoning data, and/or topographical data, to automatically generate the reference labels for the reference map.

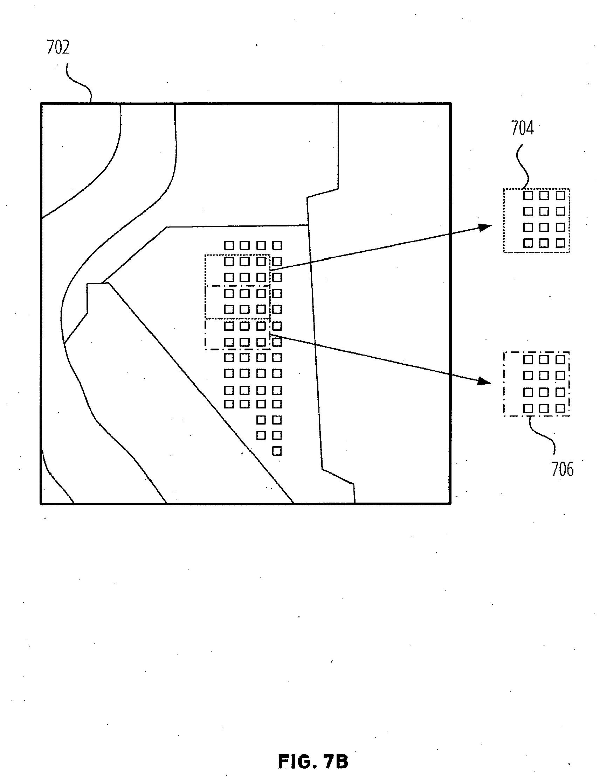

The geographic location of the reference map is known, and so, by extension, the geographic locations of the depicted objects (and the reference labels applied thereto) are also known. Accordingly, by aligning semantic labels of a captured image to the reference labels of the reference map, a precise geographic location for the captured image (and a precise position of the UAV) may be determined. However, problems can arise if patterns of labels repeat, such as often happens within a nest. FIG. 7B illustrates two non-limiting example embodiments of captured images of the area depicted in the reference map of FIG. 7B, according to various aspects of the present disclosure. FIG. 7B shows a first captured image 704 and a second captured image 706 that were captured from different locations over the depicted nest. Even though these two images are associated with different locations as indicated by the dashed boxes within the reference map 702, the patterns of semantic labels in the first captured image 704 and the second captured image 706 are highly similar due to the repeating pattern of landing space labels. What is needed are techniques that allow an accurate determination of a position to be determined, even in the presence of semantic labels that do not by themselves uniquely identify a given position.

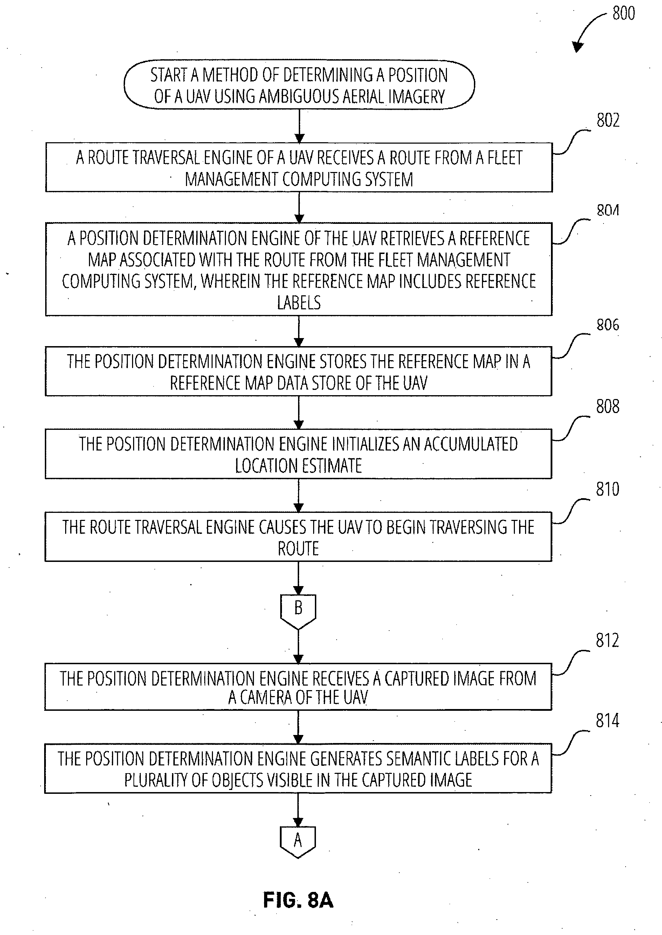

FIG. 8A - FIG. 8B are a flowchart that illustrates a non-limiting example embodiment of a method of determining a position of a UAV using ambiguous aerial imagery according to various aspects of the present disclosure. In the method 800, the UAV uses various techniques, including the accumulation of location estimates over time and, optionally, dynamic element updates received from a fleet management computing system, to compensate for the ambiguity in order to determine accurate locations based on the ambiguous aerial imagery.

From a start block, the method 800 proceeds to block 802, where a route traversal engine 318 of a UAV 300 receives a route from a fleet management computing system 410. In some embodiments, the route may indicate a starting point (i.e., a location from which the UAV 300 will be launched). In some embodiments, the route may indicate an endpoint (i.e., a location at which the UAV 300 is intended to land). In some embodiments, the route may specify a precise starting point and/or endpoint, such as a particular landing space in a nest that has a known position. In some embodiments, the route may merely specify the identity of a nest, with a particular landing space to be dynamically assigned at a later point in time. In some embodiments, the route may indicate a destination (such as a delivery location) to which the UAV 300 is intended to autonomously navigate. In some embodiments, the route may include one or more waypoints through which the UAV 300 should travel while traversing the route. In some embodiments, the route may include a two-dimensional or three-dimensional corridor through which the UAV 300 is intended to travel.

At block 804, a position determination engine 316 of the UAV 300 retrieves a reference map associated with the route from the fleet management computing system 410, wherein the reference map includes reference labels, and at 806, the position determination engine 316 stores the reference map in the reference map data store 314 of the UAV 300. In some embodiments, the UAV 300 may retrieve one or more reference maps that cover the entire route. In some embodiments, the UAV 300 may retrieve a reference map that covers a start point, a delivery location, an end point, or any other portion of the route instead of the entire route in order to conserve storage space within the reference map data store 314.

In some embodiments, the reference labels are predetermined groundtruth labels that semantically identify features visible in the reference map. In some embodiments, the reference labels may include labels for one or more dynamic elements, which may have different values depending on the state of the associated dynamic elements. For example, a landing space may be occupied (e.g., a UAV is present in the landing space) or unoccupied (e.g., the landing space is clear). As another example, a light may be on, off, or a specific color. As yet another example, an array of lights or a display may be activated to show a distinct pattern.

At block 808, the position determination engine 316 initializes an accumulated location estimate. In some embodiments, the accumulated location estimate is used to track location estimates generated by the position determination engine 316 over time, such that more frequently estimated locations will be considered more likely to be an actual location. The accumulated location estimate may represent estimated locations using any suitable format, including but not limited to a two- or three-dimensional array or grid of location probability values. Initializing the accumulated location estimate may be done in any suitable way, including but not limited to providing an initial location using a supplemental positioning modality such as one or more of a GNSS or an inertial navigation system, or by providing a location indicated in a position notification received from the fleet management computing system 410.

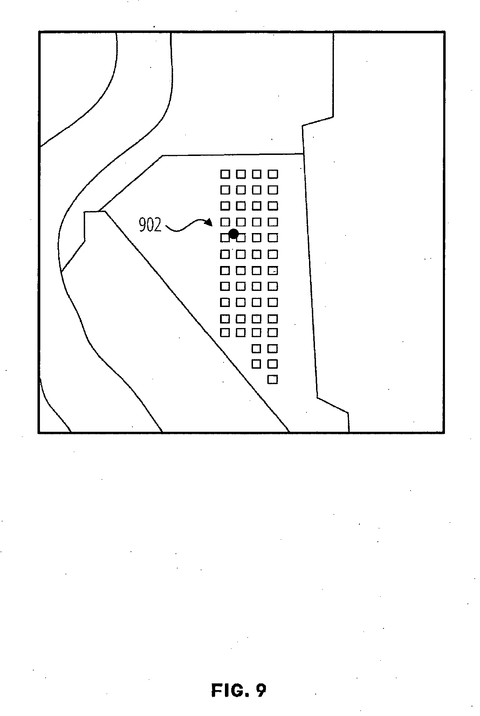

FIG. 9 illustrates a non-limiting example embodiment of an initial accumulated location estimate according to various aspects of the present disclosure. FIG. 9 shows the initial accumulated location estimate 902 superimposed on the reference map for context. As shown, the initial accumulated location estimate 902 is a small dot, indicating that the initial accumulated location estimate 902 is based on a known initial location of the UAV 300. In other embodiments, the initial accumulated location estimate may not include an initial value such as the illustrated initial accumulated location estimate 902.

Returning to FIG. 8A, at block 810, the route traversal engine 318 causes the UAV 300 to begin traversing the route. Often, beginning to traverse the route involves actuating one or more propulsion devices 310 to cause the UAV 300 to take off. In some embodiments, the route traversal engine 318 may initially cause the UAV 300 to ascend vertically over its initial location before travelling horizontally along the route, such that the UAV 300 may initially be over its departing nest. In some embodiments, the route traversal engine 318 may cause the UAV 300 to hover over its initial location while performing one or more pre-mission tests and/or configurations.

The method 800 then proceeds through a continuation terminal ("terminal B") to block 812, where the position determination engine 316 receives a captured image from a camera 320 of the UAV 300. At the beginning of the route, the UAV 300 is likely to be above its departure nest, and so the captured image is likely to depict a portion of the departure nest. In subsequent iterations (i.e., after returning to block 812 from terminal B), the captured image is likely to depict other portions of the departure nest, and/or other areas associated with the route.

At block 814, the position determination engine 316 generates semantic labels for a plurality of objects visible in the captured image. In some embodiments, the position determination engine 316 processes the captured image using one or more machine learning models that generate the semantic labels for the plurality of objects. In some embodiments, the machine learning models may generate labels for individual pixels in the captured image, and the position determination engine 316 may use various morphological operations and/or heuristics to group the labeled pixels and generate semantic labels for objects. Typically, the semantic labels are generated for types of objects that have substantially fixed locations in aerial imagery and are suitable for use as navigation landmarks, including but not limited to streets, buildings, landing spaces, telephone poles, light standards, sporting fields, and/or bodies of water.

In some embodiments, the semantic labels generated by the position determination engine 316 may include labels for one or more dynamic elements which have fixed locations but may be labeled as being in one of two or more states. As one non-limiting example, a landing space at a nest may be a dynamic element, in that a landing space may be occupied (i.e., a UAV is present on the landing space) or unoccupied (i.e., no UAV is present on the landing space). Accordingly, the position determination engine 316 may label a landing space as an occupied landing space or an unoccupied landing space. As another non-limiting example, a light or other display device may be a dynamic element, in that the light may be on or off, or may be lit in a specific color. Accordingly, the position determination engine 316 may include a label that indicates a state of the light or other display device (e.g., on or off, or an illumination color).

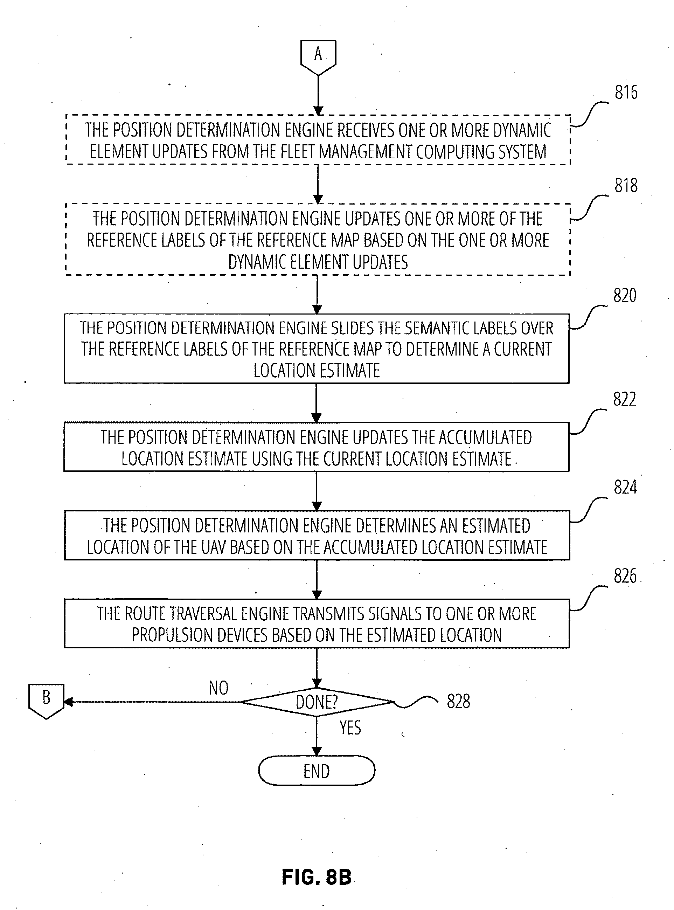

The method 800 then proceeds to a continuation terminal ("terminal A"). From terminal A (FIG. 8B), the method 800 proceeds to optional block 816, where the position determination engine 316 receives one or more dynamic element updates from the fleet management computing system 410, and at optional block 818, the position determination engine 316 updates one or more of the reference labels of the reference map based on the one or more dynamic element updates. The dynamic element updates may indicate a reference label to be updated, and may indicate the value to which the reference label should be updated in order to reflect the state of the dynamic element.

In some embodiments, the fleet management computing system 410 is in control of the status or is updated regarding the status of the dynamic elements, and so is easily able to generate the dynamic element updates from information in its possession. For example, the fleet management computing system 410 may assign landing spaces to UAVs, may be communicatively coupled to sensors that sense the presence of UAVs in landing spaces, may be informed by a charging system that a UAV is present in a landing space, may provide a user interface that allows an operator to indicate a landing space used by a UAV, or may otherwise be made aware of the presence of a UAV in a landing space. The dynamic element management engine 416 of the fleet management computing system 410 may then generate dynamic element updates based on the status of the landing spaces. In some embodiments, the dynamic element management engine 416 may itself assign landing spaces to be occupied by UAVs. As another example, the dynamic element management engine 416 may control one or more lights within the nest, and may generate the dynamic element updates based on the status of the lights that it controls.

The two optional blocks, optional block 816 and optional block 818, are illustrated and described as optional because in some embodiments, dynamic element updates may not be transmitted to the position determination engine 316. This could be either because the reference map retrieved for the route does not include any reference labels associated with dynamic elements, because no dynamic elements have changed state since the original reference map was retrieved, because the fleet management computing system 410 does not support dynamic element updates, and/or for any other reason. That said, the use of dynamic element updates to change the reference labels for dynamic elements can help reduce the number of areas in the reference map that do not have unique patterns of reference labels, and thus increase the accuracy of the current location estimates generated below.

At block 820, the position determination engine 316 slides the semantic labels over the reference labels of the reference map to determine a current location estimate. In some embodiments, the position determination engine 316 may also scale the semantic labels based on an altitude of the UAV 300 so that sizes of the semantic labels match the sizes of the reference labels in the reference map. The altitude may be determined using any suitable technique, including but not limited to a signal from an altimeter and/or a rangefinder aligned with the camera 320.

In some embodiments, the position determination engine 316 may use a cross-correlation or another suitable technique to slide the semantic labels over the reference labels of the reference map. Sliding the semantic labels over the reference labels may include comparing the semantic labels to reference labels at a plurality of relative positions between the semantic labels and the reference labels, and determining a correlation score at each position that is based on how well the semantic labels match the reference labels. In some embodiments, the current location estimate may be represented by a heatmap, an array, a grid, or another representation of the correlation score at each position between the semantic labels and the reference labels.

One will note that, if the pattern of semantic labels is unique (which may be more likely to be the case if dynamic elements of a variety of states are present in the captured image), the current location estimate may have a single peak for correlations between the semantic labels of the captured image and the reference labels of the reference map, and a position of the UAV 300 can be derived relatively simply. However, if the pattern of semantic labels is not unique, multiple peaks for correlations between the semantic labels of the captured image and the reference labels of the reference map, or a poorly defined single peak, may be present in the current location estimate.

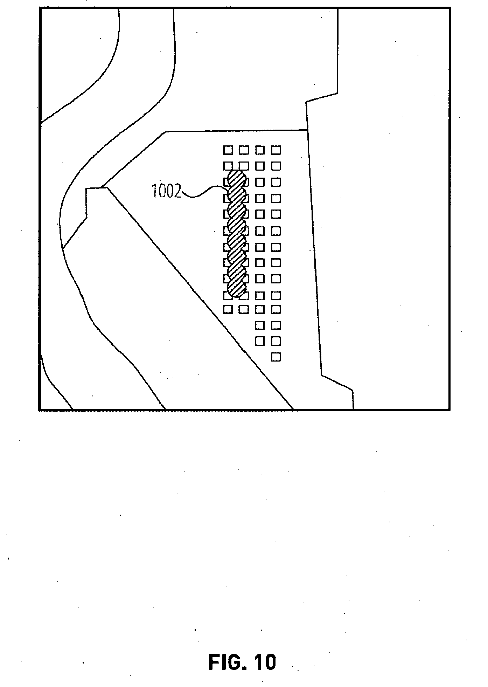

FIG. 10 illustrates a non-limiting example embodiment of a current location estimate according to various aspects of the present disclosure. As shown, the current location estimate 1002 includes multiple peaks that correspond to each of the locations in the reference map where semantic labels of a captured image such as the first captured image 704 or the second captured image 706 would align with the reference labels of the reference map.

To help compensate for this ambiguity, instead of using the current location estimate directly to determine the position of the UAV 300, at block 822 (FIG. 8B), the position determination engine 316 updates the accumulated location estimate using the current location estimate. In some embodiments, the position determination engine 316 may update the accumulated location estimate using the current location estimate by multiplying values in the accumulated location estimate by corresponding values in the current location estimate. In some embodiments, the position determination engine 316 may use one or more weights in order to give more effect to the accumulated location estimate, to the current location estimate, and/or to subportions of either. In some embodiments, the position determination engine 316 may use another technique to update the accumulated location estimate using the current location estimate.

By using the current location estimate to update the accumulated location estimate, a single peak may be obtained. The single peak may arise by virtue of being associated with a known initial position of the UAV 300, or by virtue of being otherwise previously associated with an unambiguous location determination. In some embodiments, the single peak may arise over time by virtue of small errors being canceled out, and/or by transient ambiguities being resolved.

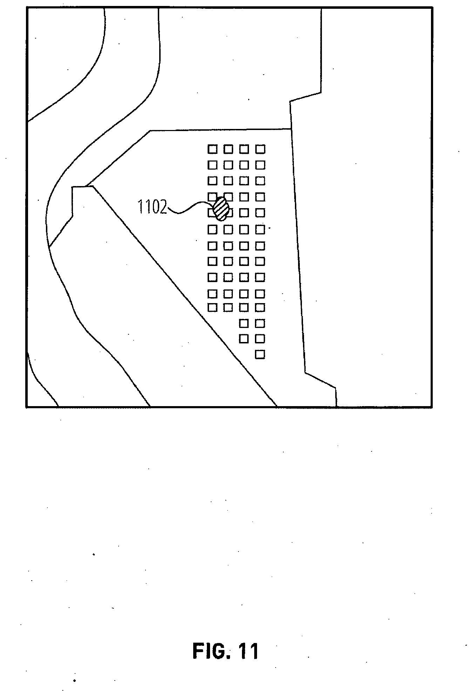

FIG. 11 illustrates a non-limiting example embodiment of an adjusted accumulated location estimate according to various aspects of the present disclosure. In FIG. 11, the values for the current location estimate 1002 of FIG. 10 are multiplied by the values for the initial accumulated location estimate 902 of FIG. 9, resulting in the adjusted accumulated location estimate 1102. By combining the initial accumulated location estimate 902 with the current location estimate 1002, the adjusted accumulated location estimate 1102 has coalesced to a single peak. From this single peak in the adjusted accumulated location estimate 1102, the position of the UAV 300 can be determined as described below.

Returning to FIG. 8B, at block 824, the position determination engine 316 determines an estimated location of the UAV 300 based on the accumulated location estimate. The position determination engine 316 may determine the estimated location by first choosing a peak of the accumulated location estimate. In some embodiments (such as the embodiment illustrated in FIG. 11), the accumulated location estimate may include only a single peak, and so the position determination engine 316 may simply use the single peak. In some embodiments, the accumulated location estimate may still include multiple peaks. In such embodiments, the position determination engine 316 may select a peak from the multiple peaks in any suitable way, including but not limited to selecting a peak associated with a previously selected peak, or a peak indicated by a supplemental positioning modality such as one or more of a global satellite navigation system (GNSS) and/or an inertial navigation system.

The location of the selected peak of the accumulated location estimate indicates an alignment between the reference map and the captured image, and the position determination engine 316 may use known techniques to determine a pose estimation of the camera 320, including one or more of an absolute camera pose regression (APR) technique, a relative camera pose regression (RPR) technique, a simultaneous localization and mapping (SLAM) method, or any other suitable technique. In some embodiments, the position determination engine 316 may use a fusion of information from other sensors to determine the estimated location. For example, the position determination engine 316 may compute a pose estimation based on the accumulated location estimate, and may use the pose estimation along with a location determined by an internal navigation system, a GNSS system, an extended Kalman filter (EKF) location, or any other available system of the UAV 300 to determine the estimated location.

In some embodiments, the estimated location determined by the position determination engine 316 is used by the route traversal engine 318 as a current position, and, the route traversal engine 318 uses this current position to determine control commands to the propulsion devices 310 in order to traverse the route. Accordingly, at block 826, the route traversal engine 318 transmits signals to one or more propulsion devices 310 based on the estimated location.

The method 800 then proceeds to decision block 828, where a determination is made regarding whether the method 800 is done determining positions. In some embodiments, the method 800 continues to determine the position of the UAV 300 throughout the remainder of the mission (i.e., while the UAV 300 is traversing the route and until the UAV 300 has landed). In some embodiments, the method 800 is performed during periods of the mission when other positioning functionality, such as GNSS, is not functional, is providing inconsistent information, or is otherwise unavailable or unreliable, but is inactive at other periods of the mission. In some embodiments, the method 800 is performed during periods of the mission when ambiguous imagery is likely to be captured (e.g., when the UAV 300 is operating near a nest).

If it is determined that the method 800 is not done determining positions, then the result of decision block 828 is NO, and the method 800 returns to terminal B to process a subsequent captured image. In subsequent iterations of the method 800, the actions of optional block 816 and optional block 818 may be performed even if they were not performed on the first iteration, or may not be performed even if they were performed on the first iteration.

Otherwise, if it is determined that the method 800 is done determining positions, then the result of decision block 828 is YES, and the method 800 proceeds to an end block for termination.

In the preceding description, numerous specific details are set forth to provide a thorough understanding of various embodiments of the present disclosure. One skilled in the relevant art will recognize, however, that the techniques described herein can be practiced without one or more of the specific details, or with other methods, components, materials, etc. In other instances, well-known structures, materials, or operations are not shown or described in detail to avoid obscuring certain aspects.

Reference throughout this specification to "one embodiment" or "an embodiment" means that a particular feature, structure, or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

The order in which some or all of the blocks appear in each method flowchart should not be deemed limiting. Rather, one of ordinary skill in the art having the benefit of the present disclosure will understand that actions associated with some of the blocks may be executed in a variety of orders not illustrated, or even in parallel.

The processes explained above are described in terms of computer software and hardware. The techniques described may constitute machine-executable instructions embodied within a tangible or non-transitory machine (e.g., computer) readable storage medium, that when executed by a machine will cause the machine to perform the operations described. Additionally, the processes may be embodied within hardware, such as an application specific integrated circuit ("ASIC") or otherwise.

The above description of illustrated embodiments of the invention, including what is described in the Abstract, is not intended to be exhaustive or to limit the invention to the precise forms disclosed. While specific embodiments of, and examples for, the invention are described herein for illustrative purposes, various modifications are possible within the scope of the invention, as those skilled in the relevant art will recognize.

These modifications can be made to the invention in light of the above detailed description. The terms used in the following claims should not be construed to limit the invention to the specific embodiments disclosed in the specification. Rather, the scope of the invention is to be determined entirely by the following claims, which are to be construed in accordance with established doctrines of claim interpretation.

## Claims

1. An unmanned aerial vehicle (UAV) configured to perform actions comprising:
receiving, from a camera of the UAV, a captured image;
generating, by the UAV, semantic labels for a plurality of objects visible in the captured image;
comparing, by the UAV, the semantic labels to reference labels associated with a reference map to determine a current location estimate;
updating, by the UAV, an accumulated location estimate using the current location estimate; and
determining, by the UAV, an estimated location of the UAV based on the accumulated location estimate.

2. The UAV of claim 1, wherein the accumulated location estimate includes a plurality of peaks, and wherein determining the estimated location of the UAV based on the accumulated location estimate includes selecting a peak from the plurality of peaks.

3. The UAV of claim 2, wherein selecting the peak from the plurality of peaks includes comparing the plurality of peaks to a location determined using a supplemental positioning modality.

4. The UAV of claim 3, wherein the supplemental positioning modality includes one or more of a global satellite navigation system (GNSS) or an inertial navigation system.

5. A method of determining an estimated location of a UAV, the method comprising:
receiving, from a camera of the UAV, a captured image;
generating, by the UAV, semantic labels for a plurality of objects visible in the captured image;
comparing, by the UAV, the semantic labels to reference labels associated with a reference map to determine a current location estimate;
updating, by the UAV, an accumulated location estimate using the current location estimate; and
determining, by the UAV, the estimated location of the UAV based on the accumulated location estimate.

6. The method of claim 5, wherein the accumulated location estimate includes a plurality of peaks, and wherein determining the estimated location of the UAV based on the accumulated location estimate includes selecting a peak from the plurality of peaks.

7. The method of claim 6, wherein selecting the peak from the plurality of peaks includes comparing the plurality of peaks to a location determined using a supplemental positioning modality.

8. The method of claim 7, wherein the supplemental positioning modality includes one or more of a global satellite navigation system (GNSS) or an inertial navigation system.

9. The method of claim 6, wherein selecting the peak from the plurality of peaks includes comparing the plurality of peaks to a previously selected peak.

10. The method of any of claims 5 to 9, further comprising:
initializing the accumulated location estimate using a supplemental positioning modality that includes one or more of a GNSS, an inertial navigation system, or a position notification from a fleet management computing system.

11. The method of any of claims 5 to 10, wherein the reference labels include one or more reference labels for dynamic elements.

12. The method of claim 11, further comprising:
receiving one or more dynamic element updates from a fleet management computing system; and
updating the reference labels for dynamic elements based on the dynamic element updates prior to comparing the semantic labels to the reference labels.

13. The method of claim 11 or claim 12, wherein the semantic labels for dynamic elements include occupied landing space labels and unoccupied landing space labels.

14. The method of any of claims 5 to 13, wherein comparing the semantic labels to the reference labels associated with the reference map includes sliding the semantic labels over the reference labels to generate the current location estimate.

15. A computer program comprising instructions that, when exected by one or more processsors, cause performance of the method of any of claims 5 to 14.
